(19) Europäisches Patentamt
European Patent Office
Office européen des brevets

(11) **EP 1 936 950 A1**

(12) **DEMANDE DE BREVET EUROPEEN**

(43) Date de publication:
**25.06.2008 Bulletin 2008/26**

(51) Int Cl.:
**H04N 1/32** *(2006.01)*     **G10L 19/00** *(2006.01)*

(21) Numéro de dépôt: **07301627.1**

(22) Date de dépôt: **05.12.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **22.12.2006 FR 0655846**

(71) Demandeur: **France Télécom**
**75015 Paris (FR)**

(72) Inventeurs:
• **Lozach, Bruno**
 **FRANCE TELECOM**
 **22300 LANNION (FR)**
• **Le Guyader, Alain**
 **22300 Lannion (FR)**
• **Bollo, José**
 **22700 LOUANNEC (FR)**

(54) **Procédé et système de détection d'un message dans un signal numérique tatoué**

(57) L'invention se rapporte à un procédé et un système de détection d'un message dans un signal numérique tatoué, une trame du signal tatoué comportant au moins un identificateur initial inséré à partir d'une séquence de référence prédéfinie. Le procédé est tel qu'il comporte les étapes d'analyse (E61) par une pluralité d'analyseurs d'un système de détection, par calcul des corrélations entre le signal tatoué et la séquence prédéfinie, d'association (E62) à chacun des analyseurs d'un score de corrélation d'identificateur initial, et de détermination (E64) de l'identificateur initial en fonction du score d'identificateur initial des analyseurs. Dans le cas où le signal tatoué comporte en outre des symboles constituant le message et des identificateurs locaux, le procédé prévoit une association de score de corrélation d'identificateur local et de score de corrélation de symboles en plus du score de corrélation d'identificateur initial à chacun des analyseurs, permettant une détermination (E63) d'un score global par analyseur. Ce score global sert alors à la détermination du message à détecter.

$x^t(n)$

$$\overline{R}^t_{\hat{x}w_I}, \overline{R}^t_{\hat{x}w_L}, \overline{R}^t_{\hat{x}w_B}$$ — E61

ScI, ScL, ScB — E62

ScG — E63

M — E64

**Fig.6**

**Description**

L'invention se rapporte à un procédé et à un dispositif de détection d'un message dans un signal numérique tatoué. Le signal numérique peut être un signal audiovisuel, notamment un signal audio.

Le tatouage permet de transmettre une information additionnelle dans des données support de manière imperceptible. Pour des données audiovisuelles cela revient à établir un canal de communication de données dissimulé, en parallèle avec l'infrastructure classique de transport de l'information.

Un des principaux avantages du tatouage est que les données auxiliaires sont dissimulées et attachées au signal et par là même sont capables de supporter des changements de format et de fréquence d'échantillonnage donnant au tatouage une interopérabilité au niveau des terminaux et des réseaux, seules les extrémités au niveau de la détection devant être compatibles avec l'insertion.

Une trame du canal de communication dissimulé dans le signal porteur est par exemple constituée d'une marque de synchronisation que l'on peut également appeler identificateur de tatouage, suivie du message inséré dans le signal, le début du message étant indiqué par l'identificateur de tatouage.

Après transmission du signal tatoué, à la lecture du media, la détection consiste d'abord à détecter l'identificateur de tatouage qui a été inséré en début de trame. Une fois cet identificateur repéré dans le contenu audio par exemple, la détection des bits du message peut commencer. Les séquences "identificateur de tatouage + message éventuel" sont insérées en continu dans le média, les débuts d'identificateur coïncidant avec les zones d'énergie suffisante propices à l'insertion. En réception, la détection de chaque séquence se fait également en continu permettant ainsi de se resynchroniser en cas de coupure dans le média porteur (édition du signal, coupures par un pirate ou encore pertes de trames de la transmission).

Les identificateurs de tatouage ainsi que les messages sont formés à partir de séquences aléatoires gaussiennes issues d'un générateur de nombres aléatoires ou de séquences Pseudo-Aléatoires (Pseudo-Noise Sequences en Anglais ou séquences PN) générées par un registre à décalage dont les cellules sont bouclées de façon à produire une séquence de sortie de longueur maximale. Toute autre séquence aléatoire issue de la théorie des machines à états finis (séquences de Gold, codes de Baker, séquences de Walsh, ...) peut convenir à condition que sa fonction de corrélation soit proche d'une distribution de Dirac.

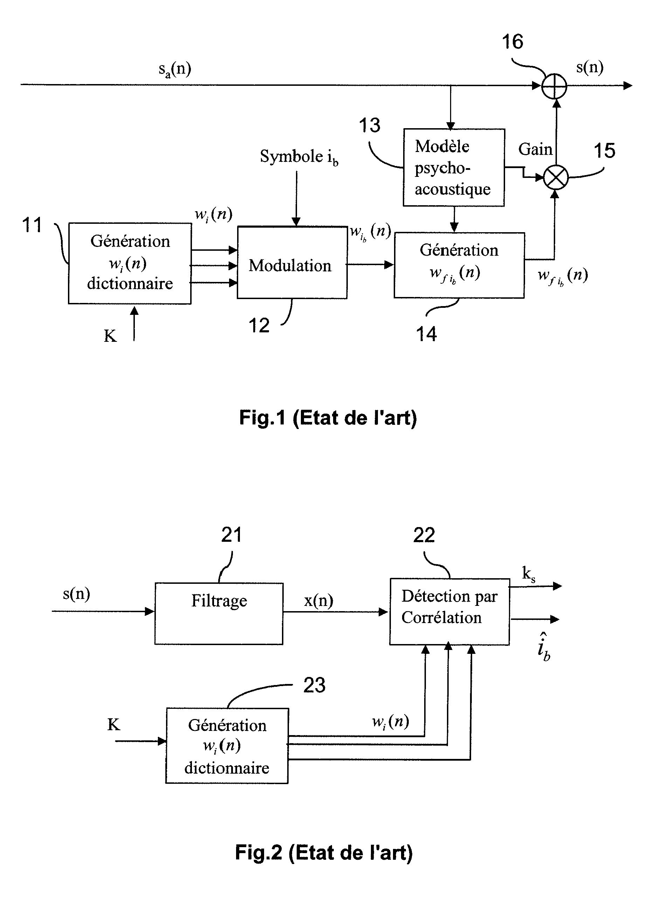

Une procédure classique de génération d'un signal tatoué est illustrée à la figure 1. Ainsi, le module 11 permet de générer un ensemble de séquences aléatoires de longueur $L$ à partir d'une ou de plusieurs valeur(s) d'initialisation K ou $K_{1,...,}K_{kc}$ fixée(s) à l'avance. On obtient ainsi un dictionnaire de séquences aléatoires $w_i(n)$, $n = 0, ..., L$-1; $i = 0, ..., N_b$-1, $N_b$ étant le nombre de bits du symbole.

Dans le cas où on veut transmettre un symbole d'information $i_b$, la modulation va faire correspondre au symbole $i_b$ la forme d'onde $w_{i_b}(n)$ d'indice $i_b$ dans le dictionnaire. Cette étape de génération est effectuée dans le module 12 et génère une séquence modulée $w_{i_b}(n)$.

Le cas de l'insertion d'un identificateur de tatouage correspond à la création d'un nouveau dictionnaire ne contenant qu'une forme d'onde $w_I(n)$ ayant une longueur $L_I$. Cette séquence aléatoire n'est pas modulée.

Un modèle psycho-acoustique 13 est pris en compte par le module 14 pour générer l'identificateur de tatouage ou le message $w_{fi_b}(n)$ de façon à le rendre inaudible. Une étape d'ajustage par un gain est effectuée en 15. Cet identificateur de tatouage ou ce message est ensuite additionné en 16 au signal audio $s_a(n)$ pour former le signal tatoué $s(n)$.

Ce signal est soit stocké sur un média pour lecture ultérieure par un lecteur soit transmis sur un réseau de transmission fixe, mobile ou de diffusion.

En réception, l'identificateur de tatouage doit être détecté pour agir sur le signal reçu, par exemple en bloquant le lecteur en cas de détection de contenu piraté.

Une procédure classique de détection d'identificateur de tatouage est illustré en figure 2.

Le signal audio tatoué $s(n)$ est d'abord blanchi par filtrage inverse par le module 21 (correspondant à l'inverse du filtrage par le modèle psycho-acoustique du module 13). L'opération de détection de la présence de l'identificateur de tatouage et du contenu de la trame elle-même est ensuite effectuée par calcul de corrélation par le module 22 entre le signal filtré $x(n)$ et la séquence aléatoire $w_i(n)$ générée par le module 23 de la même façon que lors de l'insertion.

Cette détection détermine soit un repère de trame $k_s$ lors de la détection de l'identificateur de tatouage, soit une estimation $\hat{i}_b$ du symbole d'information $i_b$ qui a effectivement été inséré.

Ne connaissant pas l'instant de début de trame dans le signal porteur, le calcul de corrélation se fait de manière glissante. On parle alors d'intercorrélation glissante ou, plus simplement, de corrélation en continu.

Cette méthode consiste à effectuer un calcul de corrélation entre les échantillons du signal tatoué et la séquence aléatoire $w_I(n)$ pour chaque décalage d'un échantillon du signal tatoué, jusqu'à ce que le début de l'identificateur de tatouage soit révélé par le fait que le coefficient de corrélation $R_{x w_1}(k)$ dépasse un seuil $S$. Pour chaque instant d'échantillonnage k , le coefficient de corrélation est donné par:

$$R_{x w_I}(k) = \sum_{n=0}^{L_I-1} w_I(n)\, x(n+k) \quad k = 0,\ldots,k_s \qquad (1)$$

Une fois le début de trame détecté, un seul calcul de corrélation suffit pour détecter le message:

$$R_{x B i} = \sum_{n=0}^{L_B-1} w_{B i}(n)\, x(n) \qquad (2)$$

sur $L_B$ échantillons du signal porteur pour chacune des $N_b$ occurences possibles de chaque symbole du message. Le symbole détecté est celui dont l'indice a une corrélation message maximale:

$$R_{x B \hat{i}_b} = Max(R_{x B i})\, i = 0,\ldots N_b - 1\,.$$

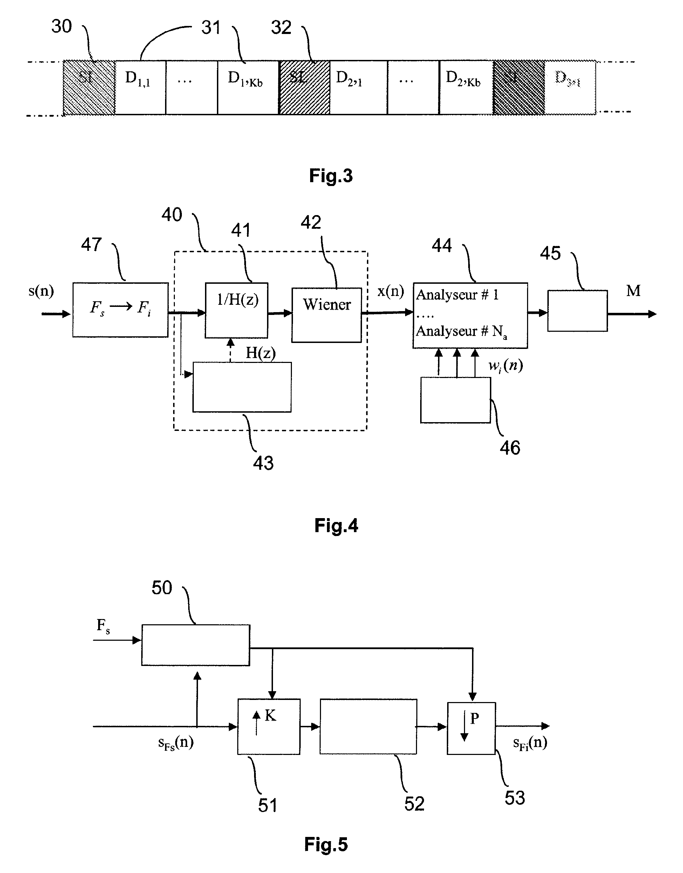

Les systèmes existants de détection de message utilisent un processus séquentiel de détection des différentes composantes d'une trame du signal tatoué. Un exemple de structure d'une trame du signal tatoué est décrit en référence à la figure 3.

Cette trame est constituée d'un identificateur initial ou synchronisation initiale SI référencé 30 permettant de détecter le début du message inséré qui est formé d'une succession de symboles ou de bits $D_k$ référencés 31 et qui sont séparés par une synchronisation locale ou encore identificateur local SL référencé 32. Cet identificateur local est inséré tous les $K_b$ symboles et a pour but d'affiner la détermination de début d'un groupe de symboles ou de bits en resynchronisant le détecteur en cas d'attaque dite de désynchronisation.

Au détecteur, on opère de façon séquentielle en détectant d'abord l'identificateur initial puis les ensembles constitués des $K_b$ symboles $D_k$ séparés par un identificateur local et qui constituent le message. Un exemple de ce type de détection opérant séquentiellement est décrit dans l'article "Controlling the Inaudibility and Maximising the Robustness in an Audio Annotation Watermarking system" de C. Baras, N. Moreau et P. Dymarski, IEEE Transactions on audio, speech, and language processing, Vol. 14, No. 5. September 2006, p1772 à 1782.

Cette façon de procéder séquentiellement présente des inconvénients. En effet, en cas de fausse détection de l'identificateur initial, la détection du message qui suit sera également erronée. Il n'est en effet pas possible de reprendre la détection de l'identificateur initial pendant la détection des identificateurs locaux et des symboles. Il en résulte que le message détecté est faux et le message inséré irrémédiablement perdu.

Les solutions possibles pour résoudre le problème de fausse détection de l'identificateur initial sont soit de répéter l'identificateur initial de manière régulière soit d'augmenter sa longueur. A capacité fixée, ces deux façons de procéder conduisent à une réduction de la longueur des symboles, donc à une diminution des performances.

La présente invention offre une solution qui ne présente pas ces inconvénients en proposant un procédé de détection d'un message permettant de prendre une décision fiable sur la détection du message ou de l'identificateur initial dans un signal tatoué.

La solution selon l'invention ne nécessite pas d'insertion périodique de l'identificateur initial et ne nécessite pas de prévoir une longueur importante pour cet identificateur initial.

A cet effet, la présente invention propose un procédé de détection d'un message dans un signal numérique tatoué, une trame du signal tatoué comportant un identificateur initial ayant été inséré à partir d'une séquence de référence prédéfinie. Le procédé est tel qu'il comporte les étapes suivantes:

- analyse par une pluralité d'analyseurs d'un système de détection, par calcul des corrélations entre le signal tatoué et la séquence de référence prédéfinie;
- association à chacun des analyseurs d'un score de corrélation d'identificateur initial;
- détermination de l'identificateur initial en fonction du score de corrélation d'identificateur initial des analyseurs.

Ainsi, la pluralité d'analyses effectuées permet d'avoir plusieurs scores de corrélation d'identificateur afin de prendre une décision plus fiable sur la détection de l'identificateur initial. Le risque d'erreur sur la détection de l'identificateur initial est donc diminué.

Dans un mode préféré de réalisation, dans lequel une trame du signal tatoué comporte un identificateur initial et plusieurs séries de symboles constituant le message inséré, les symboles ayant été insérés à partir de séquences de référence prédéfinies, le procédé est tel que:

- lors de l'étape d'analyse (E61) par une pluralité d'analyseurs un calcul des corrélations entre le signal tatoué et les séquences de référence utilisées pour l'insertion des symboles est effectué,
- lors de l'étape d'association (E62) un score de corrélation de symboles dépendant du calcul des corrélations est associé à chaque analyseur;

et qu'il comporte en outre les étapes de:

- détermination (E63) d'un score global de corrélation par analyseur, dépendant de son score de corrélation d'identificateur initial, de son score de corrélation de symboles;
- détermination (E64) du message à détecter en fonction des scores globaux des analyseurs.

De même, lorsqu'une trame du signal tatoué comporte en outre des identificateurs locaux entourant les séries de symboles du message inséré, les identificateurs ayant été insérés à partir de séquences de référence prédéfinies, le procédé est tel que:

- lors de l'étape d'analyse (E61) par une pluralité d'analyseurs un calcul des corrélations entre le signal tatoué et les séquences de référence utilisées pour l'insertion des identificateurs locaux est effectué,
- lors de l'étape d'association (E62) un score de corrélation d'identificateur local dépendant du calcul des corrélations est associé à chaque analyseur;
- la détermination (E63) d'un score global de corrélation par analyseur, dépend de son score de corrélation d'identificateur initial, de son score de corrélation de symboles et de son score de corrélation d'identificateur local;

Ainsi, la détection du message prend en compte les détections respectives de l'identificateur initial, des identificateurs locaux et des symboles.
Cette méthode de détection combinée des ensembles constitutifs de la trame du signal tatoué permet de s'affranchir d'une erreur possible dans la détection de l'identificateur initial. Ainsi, la détermination du message à détecter est plus fiable.
Dans un mode particulier de réalisation, le signal tatoué est prétraité lors d'une étape de filtrage comportant un filtrage inverse et un filtrage de Wiener utilisant un filtre calculé à partir d'une fonction de corrélation d'au moins une séquence d'apprentissage de l'identificateur initial.
Par la prise en compte de certaines caractéristiques de la séquence utilisée pour insérer l'identificateur initial , cette étape de filtrage permet d'améliorer la détection de l'identificateur initial par l'accentuation des pics éventuels de corrélation.
Dans un mode de réalisation de l'invention, le procédé comporte une procédure d'activation des analyseurs qui comporte les étapes suivantes:

- calcul de corrélation en continu entre le signal tatoué et la séquence de référence utilisée pour l'insertion de l'identificateur initial;
- comparaison des valeurs de corrélation ainsi calculées à un seuil prédéterminé;

à la détection d'une valeur de corrélation supérieure au seuil prédéterminé:

- déclenchement d'un analyseur et association d'un score de corrélation d'identificateur initial à cet analyseur.

Dans un mode particulier de réalisation, le déclenchement de l'analyseur s'effectue à la détection d'un maxima local des valeurs de corrélations supérieures au seuil.
Ainsi, la sélection d'un maxima local permet de diminuer le nombre de démarrages des analyseurs du système.
Dans un mode de réalisation préféré, le déclenchement d'un analyseur s'effectue après vérification de la disponibilité de cet analyseur dans le système de détection et en cas d'indisponibilité d'analyseur, le procédé comporte les étapes suivantes:

- comparaison des scores de corrélation d'identificateur initial des analyseurs du système de détection;
dans le cas où l'analyseur qui a le plus mauvais score de corrélation d'identificateur initial a également un score de corrélation d'identificateur initial inférieur à la valeur de corrélation à l'origine de l'étape de déclenchement:

  - arrêt de l'analyseur qui est associé au plus mauvais score et redémarrage pour une nouvelle analyse dudit analyseur avec un nouveau score d'identificateur initial.

Ceci permet d'effectuer une bonne gestion des démarrages et des arrêts des analyseurs de manière à ne prévoir qu'un nombre raisonnable d'analyseurs dans le système de détection.

Avantageusement, le calcul de corrélation en continu entre le signal tatoué et la séquence de référence utilisée pour l'insertion de l'identificateur initial s'effectue par un calcul de corrélation sur un bloc courant de $L_I$ échantillons du signal tatoué, $L_I$ étant le nombre d'échantillons de l'identificateur initial, et de façon itérative sur les $L_I$ échantillons décalés de N échantillons, $L_I$ étant multiple de N.

Une telle méthode en recouvrement minimise le nombre d'opérations à effectuer et la complexité des calculs tout en permettant une décision fiable.

Ce calcul de corrélation entre le signal tatoué et la séquence de référence utilisée pour l'insertion de l'identificateur initial s'effectue dans un mode préféré de réalisation, par une méthode de type transformée de Fourier qui comporte les étapes suivantes:

- segmentation en sous-séquences d'un bloc courant de $L_I$ échantillons du signal tatoué;
- segmentation en sous-séquences de la séquence de référence, la deuxième moitié de la sous-séquence de référence étant mise à 0;
- application d'une transformée de Fourier aux sous-séquences du bloc courant et aux sous-séquences de la séquence de référence;
- calcul de corrélations partielles par le produit sur les échantillons résultant de la transformée des sous-séquences du bloc courant et ceux du complexe conjugué des sous-séquences de la séquence de référence;
- sommation des corrélations partielles calculées;
- application d'une transformée de Fourier inverse à la somme issue de l'étape de sommation pour obtenir les valeurs de corrélation.

Selon un mode préféré de réalisation de l'invention, le score d'identificateur initial est fonction de la valeur de corrélation à l'origine de l'étape de déclenchement et du nombre d'échantillons de l'identificateur initial.

Pour diminuer les erreurs de détection de symboles dues à une prise en compte d'un début de détection erroné, le calcul de corrélation entre le signal tatoué et les séquences utilisées pour l'insertion des symboles s'effectue sur une plage de débuts possibles, le calcul donnant à la fois la valeur du symbole et le décalage par rapport à une position de début idéal.

Ceci permet de remédier notamment aux erreurs dues à des attaques sur le signal tatoué.

Ainsi, le score de corrélation de symboles est déterminé à partir des scores respectifs d'un ensemble prédéterminé de symboles, un score d'un symbole étant fonction de la valeur du maximum de corrélation du symbole, du décalage et du nombre d'échantillons du symbole.

De même, le calcul de corrélation entre le signal tatoué et la séquence utilisée pour l'insertion de l'identificateur local s'effectue sur une plage de débuts possibles autour du dernier échantillon du dernier symbole détecté, le calcul donnant à la fois la valeur de corrélation et le décalage par rapport à une position de début idéal et le score de corrélation d'identificateur local est fonction de la valeur de corrélation, du décalage et du nombre d'échantillons de l'identificateur local.

Avantageusement, le procédé comporte en outre une étape de ré-échantillonnage du signal tatoué en fonction de la fréquence d'échantillonnage du système de détection.

Ainsi, il est possible de prévoir un système de détection de moindre complexité et donc de moindre coût de traitement en utilisant une fréquence d'échantillonnage inférieure à celle du signal tatoué.

Dans un mode de réalisation de l'invention, l'étape de détermination du message à détecter s'effectue en examinant le score global des analyseurs qui ont terminé leur analyse, les recouvrements des plages d'analyse desdits analyseurs afin de résoudre d'éventuels conflits temporels.

L'invention vise également un système de détection d'un message dans un signal numérique tatoué, une trame du signal tatoué comportant un identificateur initial et plusieurs séries de symboles constituant le message inséré, entourés d'identificateurs locaux, les symboles ainsi que les identificateurs ayant été insérés à partir de séquences de référence prédéfinies. Le système est tel qu'il comporte:

- une pluralité d'analyseurs effectuant des analyses par calcul des corrélations entre le signal tatoué et les séquences de référence utilisées pour l'insertion de l'identificateur initial, des identificateurs locaux et des symboles;
- des moyens d'association à chacun des analyseurs d'un score de corrélation d'identificateur initial, d'un score de corrélation d'identificateur local et d'un score de corrélation de symboles dépendants du calcul des corrélations;
- des moyens de détermination d'un score global de corrélation par analyseur, dépendant de son score de corrélation d'identificateur initial, de son score de corrélation d'identificateur local et de son score de corrélation de symboles; et

- des moyens de détermination du message à détecter en fonction des scores globaux des analyseurs.

Le système ainsi décrit est apte à mettre en oeuvre le procédé selon l'invention.

L'invention vise aussi un terminal multimédia apte à recevoir un signal numérique tatoué qui comporte des moyens nécessaires à la mise en oeuvre du procédé selon l'invention

L'invention vise enfin un programme d'ordinateur comprenant des instructions de code pour la mise en oeuvre des étapes du procédé selon l'invention, lorsque ledit programme est exécuté par un processeur.

L'invention concerne un moyen de stockage, éventuellement totalement ou partiellement amovible, lisible par un ordinateur, stockant un jeu d'instructions exécutables par ledit ordinateur pour mettre en oeuvre les étapes du procédé selon l'invention.

Le système et le programme d'ordinateur présentent les mêmes avantages que le procédé qu'ils mettent en oeuvre.

D'autres caractéristiques et avantages de l'invention apparaîtront plus clairement à la lecture de la description suivante, donnée uniquement à titre d'exemple non limitatif, et faite en référence aux dessins annexés, sur lesquels:

- la figure 1 représente un schéma bloc d'une méthode d'insertion de l'état de l'art;
- la figure 2 représente un schéma bloc d'une méthode de détection de l'état de l'art;
- la figure 3 illustre un exemple de structure d'une trame de signal tatoué;
- la figure 4 représente un schéma bloc d'un système de détection selon l'invention;
- la figure 5 représente le module détaillé de ré-échantillonnage;
- la figure 6 illustre sous forme d'organigramme les principales étapes d'un procédé de détection d'un message conforme à l'invention;
- la figure 7 illustre sous forme d'organigramme les étapes de la procédure de gestion des analyseurs selon l'invention;
- la figure 8 illustre un mode particulier de réalisation de la procédure de déclenchement d'un analyseur selon l'invention;
- les figures 9a et 9b illustrent une méthode de détection de l'identificateur initial utilisée dans l'invention;
- la figure 10 illustre sous forme d'organigramme les étapes d'un mode de réalisation pour le calcul de corrélation relatif à l'identificateur initial;
- la figure 11 illustre sous forme d'organigramme les étapes d'un second mode de réalisation pour le calcul de corrélation relatif à l'identificateur initial;
- la figure 12 illustre sous forme d'organigramme, une méthode de calcul de corrélation pour la détection de symboles du message selon l'invention; et
- la figure 13 illustre un dispositif mettant en oeuvre le procédé selon l'invention.

La **figure 4** représente un système de détection d'un message dans un signal numérique tatoué conforme à l'invention. Ce système de détection comporte un module 47 de ré-échantillonnage qui peut être utilisé lorsque la fréquence d'échantillonnage du signal tatoué s(n) reçu par le détecteur n'est pas égale à la fréquence d'échantillonnage interne du système de détection. Cette fréquence interne $F_i$ du détecteur est celle de toutes les opérations de traitement du signal du système.

Il peut être en effet intéressant d'effectuer les opérations de traitement du signal à une fréquence plus faible que celle du signal tatoué reçu. Ceci a pour avantage de diminuer la complexité du système de détection dans un rapport de l'ordre de $F_s/F_i$ où $F_s$ est la fréquence d'échantillonnage du signal tatoué reçu et $F_i$ la fréquence interne du système de détection. Des valeurs typiques de $F_i$ sont de 16 kHz ou de 22.05 kHz. La fréquence d'échantillonnage $F_s$ du signal tatoué reçu est par exemple de 44.1kHz.

Ce principe de ré-échantillonnage est décrit en référence à la **figure 5**. Dans un premier temps, le rapport $F_s/F_i$ est approximé, dans le module 50, par le rapport de deux entiers K/P. La valeur de K est limitée par exemple à 20.

Ainsi, le module référencé 51 consiste à insérer K échantillons de valeur 0 entre les échantillons du signal $s_{F_s}$(n) de façon à ne pas changer le spectre du signal. Ce signal est ensuite filtré par le module de filtrage 52. Ce module de filtrage comporte un filtre symétrique à réponse impulsionnelle finie composé de composantes polyphases.

La fréquence d'échantillonnage est ensuite réduite par le module 53, en ne conservant qu'un échantillon sur P. On obtient ainsi un signal tatoué $s_{F_i}$(n) qui a une fréquence d'échantillonnage de $F_i$.

Pour revenir à la figure 4, le signal tatoué s(n), éventuellement ré-échantillonné, est ensuite traité par un module de filtrage 40 pour donner un signal tatoué "rehaussé". Ce module de filtrage 40 comporte un filtre inverse 41 (1/H(z)) dont les coefficients sont calculés à partir du modèle psycho-acoustique 43 du signal. A la sortie du filtre 41, le signal est ensuite filtré par un filtre de Wiener 42 pour donner le signal tatoué "rehaussé" x(n). Le filtrage de Wiener comporte un module de détermination du filtre qui fait intervenir la fonction de corrélation statistiquement représentative d'une séquence d'apprentissage de l'identificateur initial ou d'une séquence d'apprentissage calculée par concaténation des séquences de référence de l'identificateur initial, de l'identificateur local et des symboles.

Ainsi, la prise en compte de certaines caractéristiques des séquences utilisées pour insérer l'identificateur initial, les identificateurs locaux et les symboles permet d'améliorer la détection des identificateurs et des symboles par l'accentuation des pics éventuels de détection.

Dans la suite de la description, nous parlerons de signal tatoué à la fois pour désigner le signal tatoué reçu par le système de détection et le signal tatoué rehaussé. Ce signal tatoué est par exemple du type de celui décrit en référence à la figure 3.

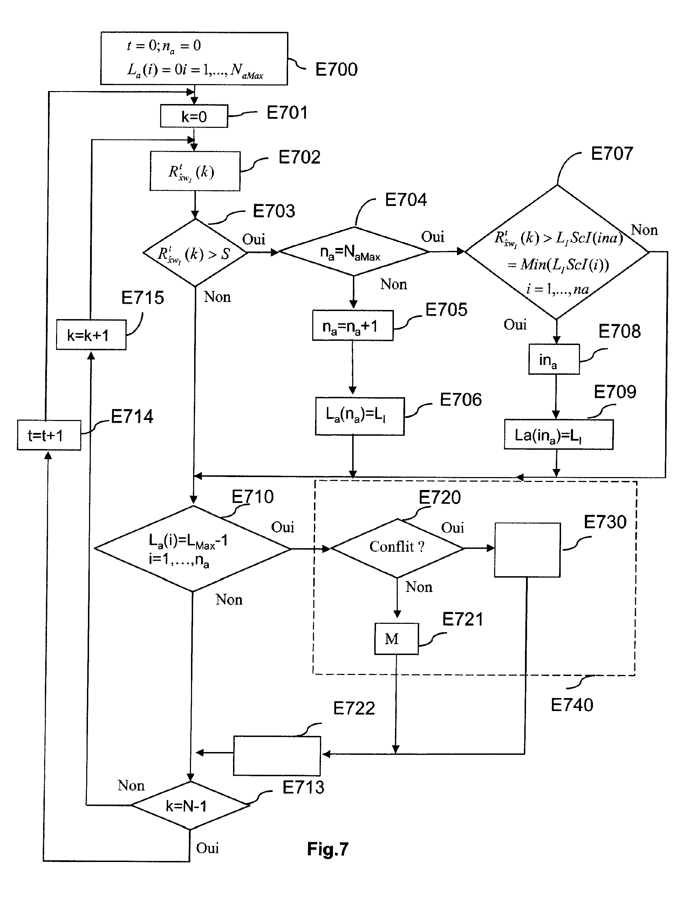

Ainsi, le signal tatoué arrive en entrée du module 44 de gestion des analyseurs qui fonctionnent en parallèle et qui sont gérés par une procédure que l'on décrira en référence à la figure 7.

En résumé, le module 44 comporte Na analyseurs qui réalisent en parallèle des calculs de corrélation entre le signal tatoué et les séquences de référence utilisées pour l'insertion de l'identificateur initial, des identificateurs locaux et des symboles du message. Un score de corrélation d'identificateur initial (ScI), un score de corrélation d'identificateur local (ScL) et un score de corrélation de symboles (ScB) sont associés à chacun des analyseurs en fonction des calculs de corrélation effectués.

Ces scores permettent de calculer un score global par analyseur.

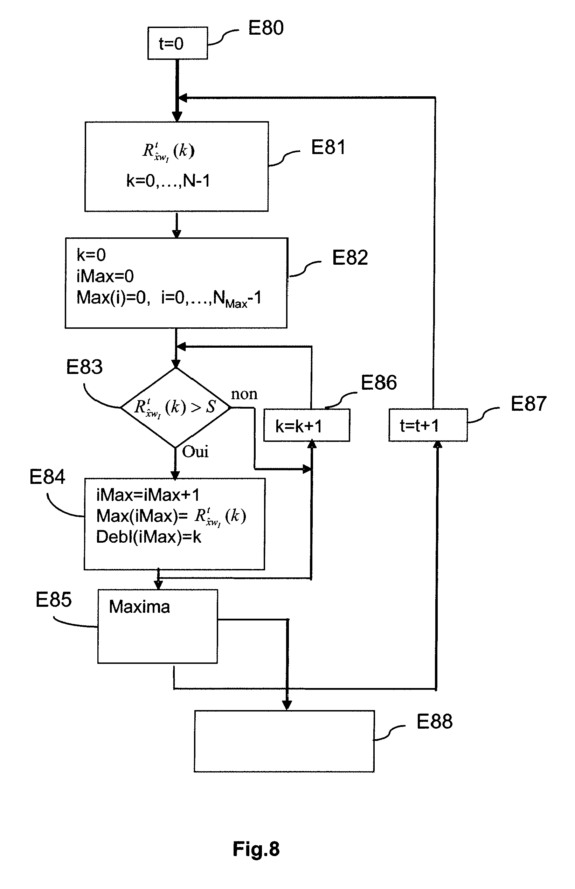

Le déclenchement des analyseurs se fait en fonction d'une valeur de corrélation relative à l'identificateur initial. Cette procédure de déclenchement sera explicitée en référence aux figures 7 et 8.

La détection des différents identificateurs et des symboles du message à détecter par les analyseurs, utilise différentes séquences de référence qui sont crées dans le domaine fréquentiel par le module 46. La génération de ces séquences de référence sera explicitée ultérieurement.

Le module 45 permet de prendre une décision sur la détection du message en fonction des analyses qui ont été effectuées par les analyseurs du module 44. Cette décision est prise en fonction du score global de chacun des analyseurs. En sortie du module 45, on retrouve donc le message détecté (M).

Un exemple de message que l'on peut détecter est la suite de caractères DRM+ ("Digital Right Management" en anglais) (32 bits) insérée dans un signal audio et qui s'affiche par exemple toutes les 15 secondes pour un flux binaire à 2.13 bit/s transporté par le flux audio.

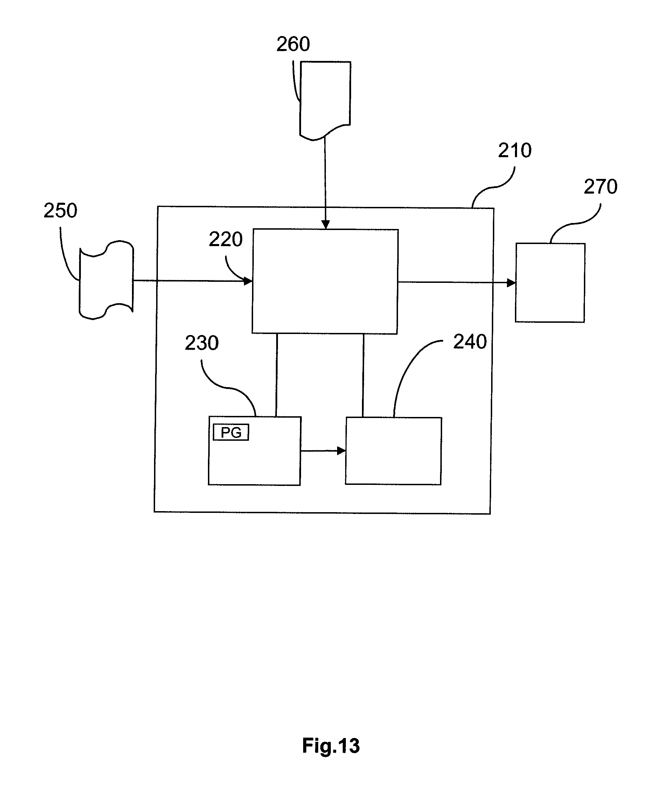

A titre d'exemple, le système de détection selon l'invention, peut être intégré à un lecteur de support multimédia comme un lecteur DVD, il peut être intégré à un téléphone mobile, un décodeur audiovisuel, soit plus généralement, un terminal multimédia ou encore un micro-ordinateur comme représenté en figure 13.

Ainsi, si le message est une suite de caractères DRM+ comme mentionné ci-dessus, une détection d'un identifiant qui n'est pas conforme aux droits attribués inhibe la lecture du contenu concerné.

Dans une autre application possible de l'invention, le message (numéro de décodeur ou identifiant de l'utilisateur) a été inséré dans un contenu à droits de diffusion restreints par un équipement de type décodeur audiovisuel. L'application de l'invention permettra de suivre la diffusion du contenu par la détection du message et donc de détecter des fraudes éventuelles de diffusion du contenu.

Le signal tatoué peut ne comporter qu'un identificateur initial. Dans ce cas, les analyseurs effectuent un calcul de corrélation entre le signal tatoué et la séquence de référence utilisée pour l'insertion de l'identificateur initial. Un score de corrélation d'identificateur initial est associé à chaque analyseur et la décision prise sur la détection de l'identificateur initial est alors faite en fonction du score de corrélation d'identificateur initial.

De même lorsque que le signal tatoué comporte un identificateur initial et des symboles (sans identificateurs locaux), les analyseurs effectuent un calcul de corrélation entre le signal tatoué et les séquences de référence utilisées pour l'insertion de l'identificateur initial et des symboles. Un score de corrélation d'identificateur initial et un score de corrélation de symboles sont associés à chaque analyseur.

En fonction de ces deux scores, un score global par analyseur est calculé et va servir à prendre une décision sur le message inséré.

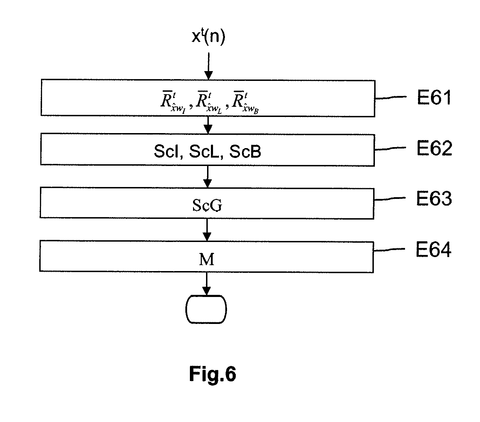

Le procédé de détection d'un message selon l'invention est maintenant décrit en référence à la **figure 6.** Pour un ensemble de blocs t du signal numérique tatoué ($x^t(n)$), le procédé selon l'invention comporte une étape E61 d'analyse par une pluralité d'analyseurs fonctionnant en parallèle, par calcul des corrélations ( $\overline{R}^t_{\hat{x}w_I}$ , $\overline{R}^t_{\hat{x}w_L}$ , $\overline{R}^t_{\hat{x}w_B}$ ) entre le signal tatoué et les séquences de référence qui ont été utilisées pour l'insertion de l'identificateur initial, des identificateurs locaux et des symboles dans le cas où les trois types d'information sont insérés dans le signal tatoué.

A l'étape E62, on associe à chaque analyseur ayant effectuée une analyse par calcul de corrélations en E61, un score de corrélation d'identificateur initial (ScI), un score de corrélation d'identificateur local (ScL) et un score de corrélation de symboles (ScB). Ces scores de corrélations sont calculés en fonction des résultats de calcul de corrélations effectuées en E61.

L'étape E63 est une étape de détermination d'un score global de corrélation par analyseur qui dépend du score de corrélation d'identificateur initial, du score de corrélation de l'identificateur local et du score de corrélation de symboles de l'analyseur en question.

L'étape E64 est une étape de détermination du message (M) à détecter. Ce message est obtenu en effectuant un diagnostic des résultats des analyseurs qui ont terminé leurs analyses. Cette détermination se fait en fonction des scores globaux de ces analyseurs. Ce diagnostic sera explicité en référence à la figure 7.

La **figure 7** illustre sous la forme d'un organigramme, les principales étapes de la procédure de gestion des analyseurs conformément à l'invention.

L'étape E700 est une étape d'initialisation de l'indice t du bloc du signal tatoué, du nombre $n_a$ d'analyseurs en cours et du repère temporel $L_a(i)$ dans les séquences d'analyse des analyseurs, i allant de 1 à $N_{aMax}$. $N_{aMax}$ est le nombre maximum d'analyseurs du système de détection.

A l'étape E701, on initialise également l'indice k de l'échantillon du bloc courant de signal tatoué.

L'étape E702 est une étape de calcul de corrélation entre le signal tatoué et la séquence de référence $\overline{w}_I$ de l'identificateur initial. On obtient ainsi une valeur de corrélation $R^t_{\hat{x}w_I}(k)$ à l'indice k du bloc courant. On compare cette valeur à un seuil S à l'étape E703.

A la détection d'une valeur supérieure au seuil S, en réponse positive de l'étape E703, l'étape E704 teste si la valeur du nombre d'analyseurs en cours, $n_a$, est égale à la valeur maximale. On regarde donc si tous les analyseurs du système de détection sont déjà utilisés donc indisponibles.

Dans la négative, on passe à l'étape E705 d'incrémentation de une unité du nombre d'analyseurs en cours ($n_a$= $n_a$+1) et on démarre à l'étape E706 un analyseur disponible. Cet analyseur démarre ainsi une nouvelle analyse à partir de l'indice temporel $L_a(na)=L_I$, le nombre d'échantillons de l'identificateur initial. On associe également à cet analyseur un score de corrélation d'identificateur initial qui dépend de la valeur de corrélation $R^t_{\hat{x}w_I}(k)$ à l'origine du démarrage de cet analyseur et de la longueur $L_I$.

Le score d'identificateur initial est donné par l'expression suivante:

$$ScI(n_a) = \frac{R^t_{\hat{x}w_I}(k)}{L_I} \qquad (3)$$

L'analyseur $n_a$ va effectuer son analyse en calculant les corrélations entre le signal tatoué et les séquences de référence respectives des identificateurs locaux et des symboles. Un score de corrélation d'identificateur local ScL est associé ainsi qu'un score de corrélation de symboles ScB.

On peut ainsi calculer un score global pour cet analyseur qui est donné par l'expression suivante:

$$ScG = \frac{ScI\ L_I + \sum_{i=0}^{N_L} ScL(i)L_L + \sum_{i=0}^{N_B-1} ScB(i)L_B}{L_I + N_L L_L + N_B L_B} \qquad (4)$$

Où $L_I$, $L_L$, $L_B$ sont les longueurs respectives de l'identificateur initial, de l'identificateur local et des symboles, $N_L$ est le nombre d'identificateurs locaux et $N_B$, le nombre de symboles.

En réponse positive à l'étape E704, c'est-à-dire s'il n'y a plus d'analyseurs disponibles dans le système de détection, on passe à l'étape E707 où on compare les scores de corrélation d'identificateur initial des analyseurs du système de détection. Si l'analyseur ($in_a$) qui a le plus mauvais score d'identificateur initial a également un score de corrélation d'identificateur initial inférieur à la valeur de corrélation $R^t_{\hat{x}w_I}(k)$ de l'étape E703, alors cet analyseur est arrêté et redémarré (étape E708) pour une nouvelle analyse en initialisant le repère temporel $L_a(in_a)$ à $L_I$ (étape E709) et un nouveau score d'identificateur initial ScI dépendant de la valeur $R^t_{\hat{x}w_I}(k)$ et de la longueur $L_I$, est associé à cet analyseur $in_a$. Cet analyseur effectue son analyse comme explicité ci-dessus pour l'analyseur $n_a$.

Si à l'étape E703, le test est négatif, on teste à l'étape E710 s'il existe un analyseur qui a fini sa séquence d'analyse. On regarde pour cela si l'indice temporel $L_a(i)$ est égal à la longueur $L_{Max}$-1, ceci pour tous les analyseurs en cours, i allant de 1 à $n_a$. $L_{Max}$ est la longueur d'une séquence d'analyse d'un analyseur. Cette longueur est égale à $L_I$+$N_L L_L$+$N_B L_B$ où $L_I$, $L_L$, $L_B$ sont les longueurs respectives de l'identificateur initial, des identificateurs locaux et des symboles et $N_L$, $N_B$ sont les nombres respectifs d'identificateurs locaux et de symboles.

En cas de réponse positive, un test E720 est effectué pour déterminer s'il y a conflit entre l'analyseur qui a terminé son analyse et les autres analyseurs qui ont fini leur analyse. Il y a conflit entre analyseurs si les analyses effectuées se chevauchent sur au moins une plage temporelle.

S'il y a conflit, l'étape E730 arrête l'analyseur en conflit qui a le plus mauvais score global ScG. Cet analyseur sera recyclé en E722, le nombre d'analyseurs en cours est donc décrémenté ici de une unité.

S'il n'y a pas conflit à l'étape E720, l'étape E721 valide le message M détecté (l'ensemble des symboles détectés) de l'analyseur de meilleur score global. Les analyseurs qui ont fini leur analyse et dont les conflits ont été résolus, sont arrêtés et recyclés en E722, où le nombre d'analyseur est décrémenté. Cette procédure d'arrêt des analyseurs et de décision de message valide peut également dans un autre mode de réalisation être effectuée en mettant en oeuvre un algorithme de type Viterbi (E740) qui prendra des décisions en fonction de valeurs stockées par les différents analyseurs. Cet algorithme va chercher le chemin sans recouvrement (message détecté par un analyseur) qui présente le score maximum.

Dans le cas d'une réponse négative à l'étape E710, les analyses en cours continuent en incrémentant l'indice dans le bloc k (E715). A la fin du bloc courant (E713), on passe au bloc suivant (E714) puis on retourne à l'étape E701.

Dans une variante de réalisation, le déclenchement des analyseurs se fait selon les étapes explicitées à présent en référence à la **figure 8**.

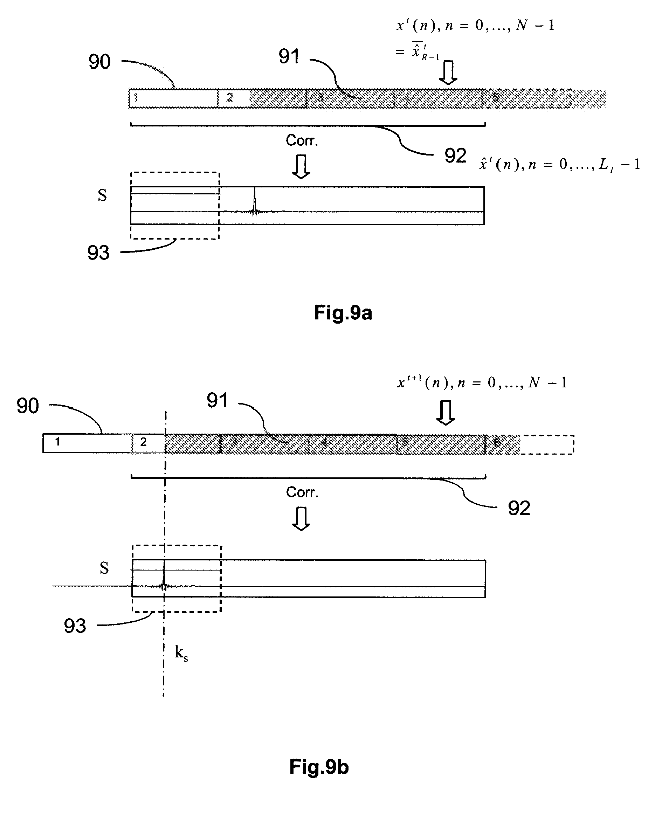

Dans une première étape E80, on initialise l'indice t du bloc courant. A l'étape E81, un calcul de corrélation en continu s'effectue entre le signal tatoué et la séquence de référence utilisée pour l'insertion de l'identificateur initial. Cette étape sera explicitée plus en détails en référence aux figures 9a, 9b, 10 et 11.

On obtient ainsi les valeurs de corrélation $R^t_{\hat{x}w_I}$ (k) pour tous les échantillons du bloc, k allant de 0 à N-1. N est le nombre d'échantillons du bloc courant. Ces valeurs sont ensuite comparées à l'étape E83 à une valeur de seuil S, ceci pour tous les échantillons (E86). Cette comparaison est faite après initialisation des valeurs de l'indice k dans le bloc courant, de l'indice d'un maxima de corrélation iMax et de la valeur maximale de corrélation Max(i) pour i, indice des maxima de corrélation allant de 0 à $N_{Max}$-1, $N_{Max}$ étant le nombre maximum d'échantillons retenus dans un tableau $\overline{Max}$.

Lorsqu'une valeur de corrélation dépasse le seuil S, on incrémente l'indice iMax et on retient la valeur de cet indice et de la corrélation $R^t_{\hat{x}w_I}$ (k) correspondante en les stockant dans les tableaux $\overline{Max}$ et $\overline{DebI}$ (E84). On stocke ces valeurs en mémoire.

A l'étape E85, on regroupe en un seul point les points qui sont situés dans un même voisinage et qui dépassent le seuil S. On regarde donc tous les points voisins qui dépassent sans discontinuité, le seuil S et on prend le maxima de ces points voisins. On sélectionne ainsi un seul maxima local.

La détermination de ce maxima va déclencher le démarrage d'un analyseur du système de détection en E88. Cette étape correspond à l'entrée en étape E704 de la figure 7.

On fait ceci pour tous les blocs (E87).

La sélection d'un seul maxima parmi un ensemble de maxima locaux permet de limiter le nombre de démarrages des analyseurs.

Le nouvel analyseur (iAna) déclenché à l'étape E88, va également poursuivre son travail et effectuer un calcul de corrélation entre le signal tatoué et les séquences de références utilisées lors de l'insertion des identificateurs locaux et des symboles. Au démarrage de cet analyseur, on lui associe un score d'identificateur initial qui est fonction du maxima de corrélation sélectionné qui a déclenché son démarrage et de la longueur de la séquence de référence de l'identificateur initial ($L_I$).

Le score d'identificateur local ScI de l'analyseur en question iAna est obtenu par la formule suivante:

$$ScI(iAna) = \frac{R^t_{\hat{x}w_I}(DebI(iMax))}{L_I} \qquad (5)$$

Où $R^t_{\hat{x}w_I}(DebI(iMax))$ représente le maxima de la valeur de corrélation et $L_I$, la longueur de la séquence de référence de l'identificateur initial, c'est-à-dire le nombre d'échantillons.

Nous allons expliciter à présent en référence aux **figures 9a et 9b**, un mode de réalisation d'un calcul de corrélation en continu entre le signal tatoué filtré et la séquence de référence utilisée pour l'insertion de l'identificateur initial. Ce calcul correspond aux étapes E702 et E81 des figures 7 et 8.

Le signal tatoué représenté en 90 est reçu en continu. L'identificateur initial issu d'une séquence de référence de longueur $L_I$ est constituée de R blocs de N échantillons, soit de $L_I = R*N$ échantillons. Cet identificateur initial est représenté en grisé sous la référence 91 sur les figures 9a et 9b. Une analyse par bloc de $L_I$ échantillons est effectuée. Ce bloc courant $\hat{x}^t(n)$ pour n allant de 0 à $L_I$ -1 est référencé sur la figure en 92. Un calcul de corrélation est effectué entre ce bloc courant et la séquence de référence $w_I(n)$ générée comme lors de l'insertion. On compare ensuite les valeurs de corrélation obtenue pour les N premiers échantillons comme représenté en 93 sur les figures 9a et 9b.

Pour passer au nouveau bloc courant, le bloc précédent est décalé vers la gauche de N échantillons et le bloc $x^{t+1}$ *(n), n* = 0,..., *N-1* de signal tatoué est placé dans sa partie droite. C'est ce qui est indiqué sur la figure 9b où le bloc analysé en 92 devient le bloc courant. On constate sur la figure 9b que l'identificateur inséré représenté en grisé en 91 s'est décalé de N échantillons vers la gauche par rapport au bloc précédent représenté en 92 sur la figure 9a (et qui était le bloc courant de l'étape précédente).

Sur cette figure 9b, on constate que le calcul de corrélation donne une valeur supérieure au seuil sur les N premiers échantillons. Ceci indique donc la position $k_s$ du début de l'identificateur initial.

Avec cette méthode d'analyse par recouvrement, un exemple de calcul de la corrélation est donné par l'expression suivante :

$$R^t_{\hat{x}w_I}(k) = \sum_{n=0}^{L_I-1} w_I(n)\hat{x}^t(n+k) \qquad \text{k=0,\dots, L}_I\text{ -1} \qquad (6)$$

Cette méthode pour calculer la corrélation pour des blocs en recouvrement peut avantageusement s'effectuer dans le domaine de Fourier.

La technique proposée consiste à subdiviser la séquence $\hat{x}^t(n)$ en sous-séquences $\hat{x}_i^t(n)$ qui se recouvrent comme suit :

$$\hat{x}_i^t(n) = \hat{x}^t(n+Ni)n = 0,1,\dots,2N-1, i = 0,1,\dots,R-1 \quad (7)$$

et la séquence $w_I(n)$ en sous-séquences $w_{I_i}(n)$ telles que :

$$w_{I_i}(n) = \begin{cases} \text{w}_I(\text{n}+\text{Ni}) & \text{n} = 0,1,\dots,\text{N}-1 \\ 0 & \text{n} = \text{N},\dots,2\text{N}-1 \end{cases} \quad \text{i} = 0,1,\dots,\text{R}-1 \quad (8)$$

Pour chaque paire de sous-séquence $x_I^t(n)$ et $w_{I_i}(n)$ de longueur 2N, la séquence $Cor_i(m)$ représentant la corrélation périodique de $\hat{x}_i^t(n)$ et $w_{I_i}(n)$ est calculée. Ce qui s'écrit avec les séquences originales $\hat{x}^t(n)$ et $w_I(n)$ :

$$Cor_i(m) = \sum_{n=0}^{N-1} w_I(n+iN)\,\hat{x}^t(n+iN+m) \qquad \text{m} = 0,1,\dots,\text{N}-1 \qquad (9)$$

En sommant ces corrélations partielles sur les *R* sous-blocs, on obtient la corrélation totale entre les deux séquences. Il existe cependant une méthode plus efficace pour calculer les inter-corrélations en passant par la transformée de Fourier ou FFT.

Pour cela on calcule $\hat{X}_i^t(k)$ et $W_{I_i}(k)$, les FFT des signaux $\hat{x}_i^t(n)$ et $w_{I_i}(n)$ puis le produit:

$$Y_i(k) = \hat{X}_i^t(k) W_{I_i}^*(k) \qquad (10)$$

En sommant les contributions sur les $R$ sous-trames de $\overline{Y}_i$ dans le domaine fréquentiel et en effectuant une transformée de Fourier inverse, on obtient l'intercorrélation cherchée:

$$\overline{R}_{\hat{x}w_I}^t = IFFT\left(\sum_{i=0}^{R-1} \overline{Y}_i\right) \qquad (11)$$

Une façon d'accélérer encore plus les calculs est obtenue en constatant que le calcul de la corrélation pour un bloc t+1 et celui pour un bloc t ont en commun les R-1 blocs de signal tatoué les plus récents, $\hat{x}_1^t(n)$, $\hat{x}_2^t(n)$, ..., $\hat{x}_{R-1}^t(n)$. Le seul nouveau bloc de signal entrant dans la corrélation est le bloc $\hat{x}_{R-1}^{t+1}(n)$ qui prend la place du bloc $\hat{x}_{R-1}^t(n)$ de la trame précédente. Les FFT des signaux tatoués pour le bloc t et le bloc t+1 auront donc également R-1 blocs spectraux en recouvrement.

Une façon efficace d'effectuer les calculs au bloc t+1 connaissant les signaux spectraux au bloc t est donc de décaler les signaux spectraux, de laisser tomber les coefficients du bloc le plus ancien et de rajouter la FFT du bloc de signal entrant en position des coefficients spectraux les plus récents. Dans cette façon de procéder une seule FFT de taille 2N sera effectuée par bloc courant de $L_I$ échantillons référencé en 92.

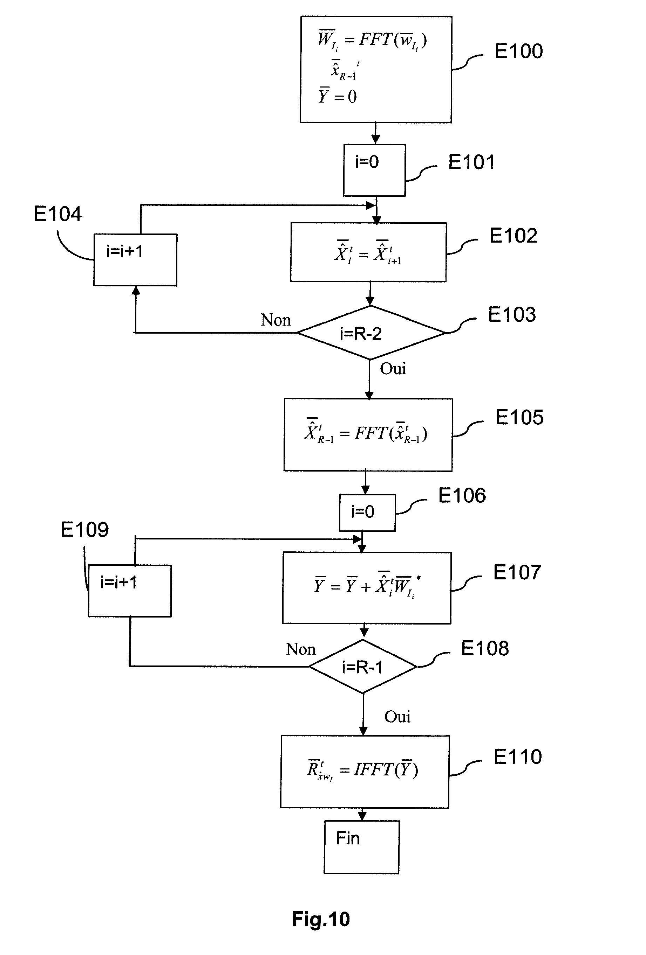

La **figure 10** illustre sous forme d'organigramme les étapes pour mettre en oeuvre une telle procédure.

Ainsi, à l'étape E100 on obtient $\overline{W}_{I_i} = FFT(\overline{w}_{I_i})$, les transformées de Fourier des sous-blocs $\overline{w}_{I_i}$ définis par l'équation (8) de la séquence de référence de l'identificateur initial, pour i allant de 0 à R-1. On initialise le tableau $\overline{Y}$ contenant les corrélations partielles à 0. On s'intéresse au bloc de signal entrant $\hat{x}_{R-1}^t$.

Dans la première boucle de E101 à E104, pour i=0 (E101) à i=R-2 (E103), on garde en mémoire (E102) les FFT calculées pour les blocs précédant le bloc courant entrant. On décale de 2N échantillons le buffer des signaux spectraux stockés en mémoire référencés par les R tableaux complexes $\overline{\hat{X}}_i^t$ de taille 2N.

Puis, à l'étape E105, on calcule la FFT du bloc entrant $\hat{x}_{R-1}^t(n)$. On obtient $\overline{\hat{X}}_{R-1}^t = FFT(\overline{\hat{x}}_{R-1}^t)$. Dans la boucle suivante, de E106 à E109, on calcule le produit des coefficients complexes de l'identificateur initial conjugué et du signal tatoué et on somme les résultats partiels dans $\overline{Y}$ (E107), ce qui revient à calculer: $\overline{Y} = \sum_{i=0}^{R-1} \hat{X}_i^t(k) W_{I_i}^*(k)$.

Finalement, on retrouve à l'étape E110, $R_{\hat{x}w_I}^t(k)$ k=0,...,2N-1, les corrélations de $\overline{\hat{x}}^t$ et $\overline{w}_I$, par FFT inverse de $\overline{Y}$. Seuls les N premiers échantillons de $R_{\hat{x}w_I}^t(k)$ sont à conserver. L'opération de conjugaison complexe en E107 peut être effectuée une fois pour toutes à l'initialisation de l'étape E100.

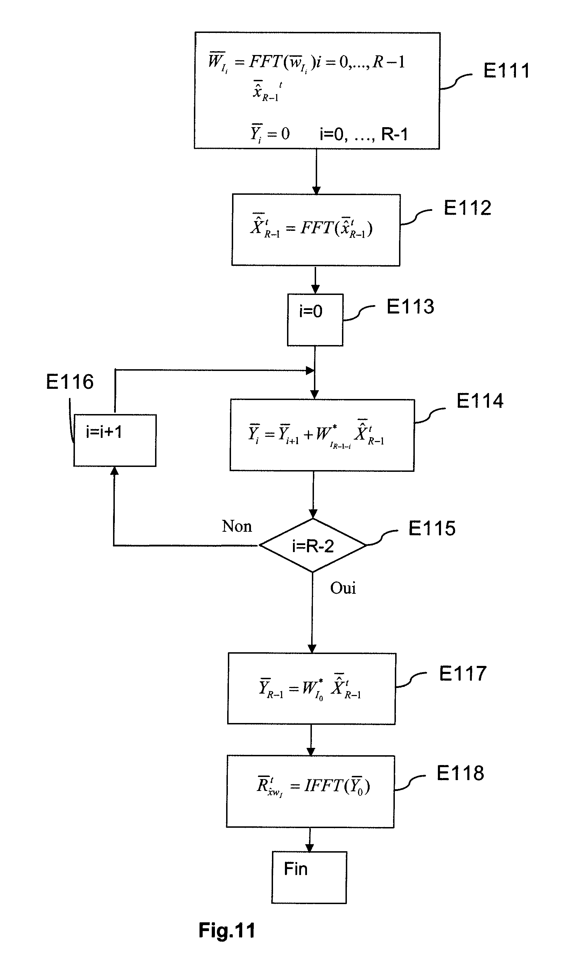

La **figure 11** illustre à présent un organigramme représentant les étapes d'un second mode de réalisation pour le calcul de corrélation entre le signal tatoué et l'identificateur initial.

Dans cette autre réalisation, on ne garde pas en mémoire les FFT des R blocs de signal tatoué $\overline{\hat{X}}_i^t$, i=0,..., R-1 . Cette méthode consiste à calculer pour chaque bloc courant t, la contribution du bloc courant $\overline{\hat{X}}_{R-1}^t$ pour toutes les intercorrélations partielles $\overline{Y}_i$ i = 0,..., $R$-1.

Ainsi, à l'étape E111 de la figure 11, on obtient $\overline{W}_{I_i} = FFT(\overline{w}_{I_i})$, les transformées de Fourier des sous-blocs $\overline{w}_{I_i}(n)$ définis par l'équation (8) de la séquence de référence de l'identificateur initial, pour i allant de 0 à R-1. On s'intéresse au bloc de signal entrant $\hat{x}_{R-1}^t(n)$. Les mémoires $\overline{Y}_i$ des corrélations partielles dans le domaine spectral sont initialisées à 0.

A l'étape E112, on calcule la FFT du bloc courant $\hat{x}_{R-1}^t(n)$. On obtient $\overline{\hat{X}}_{R-1}^t = FFT(\overline{\hat{x}}_{R-1}^t)$.

Dans la boucle E113 à E116, les contributions spectrales du bloc courant $W^{*}_{I_{R-1-i}} \overline{\hat{X}}^{t}_{R-1}$ sont ajoutées à chacune des corrélations partielles $\overline{Y}_{i+1}$ et stockées dans $\overline{Y}_{i}$.

A l'étape E117, il reste à initialiser la corrélation partielle $\overline{Y}_{R-1}$ par les valeurs du tableau $W^{*}_{I_{0}} \overline{\hat{X}}^{t}_{R-1}$.

Au cours de cette procédure itérative, on notera que $\overline{Y}_{R-1}$ ne contient qu'une contribution de $\overline{\hat{X}}^{t}_{R-1}$, $\overline{Y}_{R-2}$ contient la contribution de $\overline{\hat{X}}^{t}_{R-1}$ et de $\overline{\hat{X}}^{t}_{R-2}$ et ainsi de suite.

La corrélation recherchée $R^{t}_{\hat{x}w_{I}}$ (k) k=0,...,2N-1 est obtenue par FFT inverse de $\overline{Y}_{0}$. Seuls les N premiers échantillons de $R^{t}_{\hat{x}w_{I}}$ (k) sont à conserver. L'opération de conjugaison complexe en E114 et E117 peut être effectuée une fois pour toutes à l'initialisation de l'étape E111.

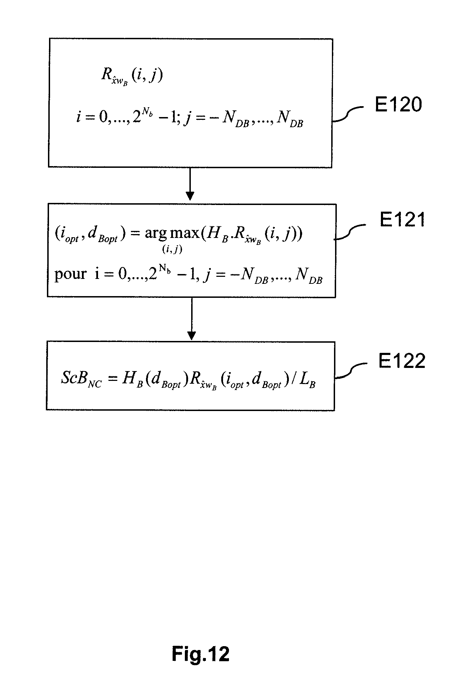

En référence à la **figure 12**, nous allons à présent décrire les principales étapes mises en oeuvre pour la détection des symboles du message inséré.

Un symbole se trouve immédiatement, soit après un autre symbole soit après un identificateur local soit après l'identificateur initial comme représenté en référence à la figure 3. Sa position "idéale" $t_{b}$ est donc donnée soit par celle du premier échantillon qui suit le dernier échantillon du symbole précédent soit par celle du premier échantillon qui suit l'identificateur initial ou un identificateur local placé tous les $K_{b}$ symboles.

Cependant, du fait d'attaques du signal tatoué, le détecteur ne trouve pas forcément la position du début de symbole à sa position "idéale".

Dans un mode de réalisation de l'invention, la détection des symboles prévoit d'effectuer les recherches sur des séquences qui peuvent commencer un peu avant ou un peu après cette position "idéale".

Les recherches sont effectuées dans une plage de débuts possibles, plage appelée "fenêtre de recherche".

Cette façon de procéder a l'avantage de tenir compte de la possibilité que des échantillons soient perdus ou insérés (problèmes de transmission, attaques, ré-échantillonnage) et de la possibilité d'ajout de bruit sur le signal tatoué.

L'information binaire des symboles est transportée par des séquences temporelles de référence $\overline{w}_{B}$ de $L_{B}$ échantillons qui sont générées par des générateurs de nombres aléatoires. Ces séquences, connues à l'insertion et à la détection sont stockées en mémoire dans un dictionnaire.

Deux types de modulations sont considérés, la modulation de formes d'ondes orthogonales et la modulation de formes d'ondes bi-orthogonales.

Dans le cas d'une modulation de formes d'ondes orthogonales, la forme d'onde à insérer sera choisie dans un répertoire de formes d'ondes orthogonales identique à l'insertion et à la détection:

$$\left\{ \begin{array}{l} w_{Bi}(\text{n}) \quad \text{i} = 0,...,2^{\text{N}_{b}-1} \\ \text{n} = 0,...,\text{L}_{\textbf{B}} - 1 \end{array} \right\} \qquad (12)$$

L'indice i dans le dictionnaire est composé de $N_{b}$ bits d'information codée $\{c_{N_{b}-1}c_{N_{b}-2}\cdots c_{1}c_{0}\}$ donné par l'expression:

$$i = \sum_{k=0}^{N_{b}-1} c(i)\, 2^{k} \qquad (13)$$

Pour faciliter la détection, les formes d'ondes $w_{Bi}(n)$ des dictionnaires d'insertion et de détection sont orthogonalisées par une procédure dite de Gram-Schmidt.

Dans une procédure classique de détection, si on suppose que le premier échantillon du symbole à rechercher est donné par $t_{B}$, la détection du symbole émis consiste à rechercher celui des $2^{N_{b}}$ symboles qui donne le maximum de la corrélation:

$$R_{\hat{x}w_B}(i) = \sum_{n=0}^{L_B-1} x(t_B + n)w_{Bi}(n) \quad i = 0,....,2^{N_B} - 1 \tag{14}$$

Dans la méthode selon l'invention, la recherche sur les symboles est effectuée comme précédemment avec en plus, une recherche de corrélation autour de la position idéale du début du symbole.

La recherche est faite sur une plage $[t_B\text{-}N_{DB};t_B + N_{DB}]$ de débuts possibles, centrés autour de $t_B$ où $N_{DB}$ représente le nombre d'échantillons de recherche avant et après $t_B$. Une valeur typique de $N_{DB}$ est de 5 échantillons.

La recherche des symboles fournit donc deux informations: Le symbole trouvé $i_{opt}$ donné par sa décomposition binaire par l'équation (13) et le décalage $d_{Bopt}$ par rapport à la position de début idéale $t_B$ pour lesquels la corrélation suivante est maximisée:

$$R_{\hat{x}w_B}(i, j) = \sum_{n=0}^{L_B-1} \hat{x}(t_B + n + j)w_{Bi}(n) \quad \text{i} = 0,...,2^{N_b} - 1, j = -N_{DB},...,N_{DB} \tag{15}$$

Ainsi, en référence à la figure 12, la détection des symboles se fait par les étapes E120 à E122.

A l'étape E120, un calcul de corrélation spécifiée par l'équation (15) ci-dessus est effectué.

A l'étape E121, on calcule le décalage optimal $j = d_{Bopt}$ et le symbole détecté $i_{opt}$. Ces valeurs sont telles que:

$$(i_{opt}, d_{Bopt}) = \arg\max_{(i,j)}(H_B.R_{\hat{x}w_B}(i, j)) \quad \text{pour } \text{i} = 0,...,2^{N_b} - 1, j = -N_{DB},...,N_{DB} \tag{16}$$

Elles sont ainsi obtenues dans une double boucle de calcul sur les indices $i$ et $j$ à partir de la corrélation $R_{\hat{x}w_B}(k, j)$ pondérée par une fenêtre $H_B(n)$ centrée sur $t_B$.

A titre d'exemple non limitatif, on peut prendre une fenêtre symétrique de Hanning donnée par:

$$H_B(n) = \frac{1}{2}\left[1 - \cos\left(\frac{2\pi.(n + N_{DB} + 1)}{2(N_{DB} + 1)}\right)\right] \quad n = -N_{DB},...,N_{DB} \tag{17}$$

Cette fenêtre reflète le fait que la confiance que l'on a de trouver la séquence est plus forte près de son début "idéal" $t_B$.

A l'étape E122, on calcule alors le score de corrélation du symbole qui est fonction de la valeur du maximum de la corrélation du symbole détecté, et du décalage par rapport à la position de début initial. Ce score est donné par l'expression suivante:

$$ScB_{NC} = H_B(d_{Bopt})R_{\hat{x}w_B}(i_{opt}, d_{Bopt})/L_B \tag{18}$$

Où $H_B(n)$ est une fenêtre de pondération, de Hanning à titre d'exemple.

Le score de chaque détection symbole non corrigée $ScB_{NC}$ est dirigé vers le décodage canal pour correction éventuelle.

Dans le cas d'une modulation de forme d'ondes bi-orthogonales, la forme d'onde à insérer sera choisie dans un répertoire de formes d'ondes orthogonales pour la première moitié du dictionnaire et par inversion de signe pour la seconde moitié:

$$\begin{cases} w_{Bi}(n) & i = 0,1,\ldots, 2^{N_b-1} - 1 \\ -w_{Bi}(n) & 2^{N_b} - (i+1) = 2^{N_b-1},\ldots, 2^{N_b} - 1 \\ n = 0,\ldots, L_B - 1 \end{cases} \quad (19)$$

La recherche du symbole qui a été inséré est effectuée en recherchant les indices $i_{opt}$ et $d_{Bopt}$ tels que:

$$(i_{opt}, d_{Bopt}) = \arg\max_{(i,j)}(H_B.R_{\hat{x}w_B}(i,j)) \quad \text{pour } i = 0,\ldots,2^{N_b-1} - 1, j = -N_{DB},\ldots,N_{DB} \quad (20)$$

Si la valeur de la corrélation $R^{\wedge}_{xw_B}(i_{opt}, d_{opt})$ est négative, cela veut dire que c'est l'indice $i_{opt} = 2^{N_b-1} + i_{opt}$ qui a été inséré. Cette façon de procéder permet de réduire la complexité de la recherche de l'indice inséré de façon significative dans un rapport 2.

La procédure de recherche pour le cas de la modulation bi-orthogonale est analogue à celle décrite en référence à la figure 12 avec le calcul de $R^{\wedge}_{xw_B}(i, j)$ donné par l'équation (20).

Les bits correspondant aux symboles reconnus par le détecteur sont transmis au décodage canal. Quand le codage utilisé permet la détection et la correction d'erreurs de transmission, le procédé selon l'invention effectue si possible la correction.

Les bits sont transmis au décodeur canal avec leur score. Si des erreurs sont détectées, les scores des bits décodés sont alors modifiés. Le codage de Hamming (7,4), le codage de Viterbi 3/2 et 4/2 ont été expérimentés et donnent de bons résultats.

La modification des scores pour le codage de Hamming (7,4) est décrite à titre d'exemple non limitatif. Les 7 bits qui entrent dans le décodeur de Hamming sont pourvus des scores $ScB_{NC}(0), \ldots, ScB_{NC}(6)$ obtenus en sortie de la détection de corrélation de symboles. Lorsqu'une erreur est détectée sur le bit d'ordre k, le score correspondant à $ScB_{NC}(k)$ est corrigé par mise de $ScB_C(k)$ à 0 sinon la valeur $ScB_{NC}(k)$ est affectée à $ScB_C(k)$. Le score des 4 bits décodés sera identique et donné par une moyenne des scores des bits après correction:

$$ScB(j) = \frac{\sum_{i=0}^{6} ScB_C(i)}{7} \quad j = 0,\ldots,3 \quad (21)$$

Chaque analyseur décrit précédemment concatène les groupes de 4 bits et délivre à l'organe de décision l'ensemble des scores de symboles $ScB(i), i = 0,.., N_B - 1$. Le score global peut alors être calculé conformément à l'équation (4) décrite précédemment.

Dans le cas où, à l'insertion, un même symbole est inséré plusieurs fois dans le signal porteur pour améliorer la fiabilité de la corrélation, les corrélations correspondant aux messages détectés coté détecteur, seront accumulées en fonction du paramètre de répétition d'insertion $K_{rep}$ de la façon suivante:

$$R_{\hat{x}w_B}(i,j) = \sum_{n=0}^{L_B-1} \sum_{k_r=0}^{K_{rep}-1} \hat{x}(t_B + n + k_r L_B + j) w_{Bi}(n) \quad i = 0,\ldots,2^{N_b} - 1, j = -N_{DS},\ldots,N_{DS} \quad (22)$$

où $K_{rep}$ est le nombre de répétitions de l'insertion du symbole.

Pour éviter l'apparition de la périodicité de la séquence de référence du message, la clef ou graine de génération de la séquence de référence pourra être dépendante de l'indice de répétition $k_r$.

Une généralisation de cette façon de procéder est de segmenter la synchronisation initiale et locale en tronçons comme décrit pour les symboles. En réception, les corrélations seront accumulées suivant une procédure semblable à celle de l'équation (22).

Le calcul des corrélations des identificateurs locaux est proche de celui effectué pour les symboles.

Rappelons que l'identificateur local ou synchronisation locale est ajouté devant un groupe de $K_b$ symboles (voir figure 3) de façon à permettre une détection assez précise du début de groupe de symboles. Cet identificateur local est utile pour lutter contre les désynchronisations dues à l'ajout ou la perte d'échantillons (cropping en l'anglais).

L'instant probable de début de la synchronisation locale $t_L$ est donc le premier échantillon qui suit le dernier échantillon du dernier symbole. La recherche de l'identificateur local est effectuée sur une plage $[t_L - N_{DL} ; t_L + N_{DL}]$ de débuts possibles, centrés autour de $t_L$ où $N_{DL}$ représente le nombre d'échantillons de recherche avant et après $t_L$. Une valeur typique de $N_{DL}$ est de 25. La recherche de l'identificateur local fournit donc l'information de décalage $d_{Lopt}$ par rapport à la position idéale de début conformément à l'équation suivante:

$$R_{\hat{x}w_L}(j) = \sum_{n=0}^{L_L-1} x(t_L + n + j)w_L(n) \quad j = -N_{DL},...,N_{DL} \quad (23)$$

où $w_L(n)$ est la séquence de référence de l'identificateur local, c'est-à-dire une séquence de $L_L$ nombres aléatoires générés avec une graine spécifique. Une valeur typique de $L_L$ est de 4096.

Le décalage optimal $j = d_{Lopt}$ est obtenu dans une boucle de calcul sur tous les décalages possibles à partir de la corrélation $R_{\hat{x}w_L}(j)$ pondérée par une fenêtre $H_L(n)$ centrée sur $t_L$.

Le score de la détection de l'identificateur local est donné par l'expression:

$$ScL = H_L(d_{Lopt})R_{\hat{x}w_L}(d_{Lopt})/L_L \quad (24)$$

où $H_L(n)$ est une fenêtre de pondération, une fenêtre de Hanning à titre d'exemple.

Le score de la synchronisation locale $ScL$ est dirigé vers l'organe de décision de message qui calcule le score global $ScG$ conformément à l'équation (4) décrite précédemment.

La description qui suit vise à expliquer les étapes mises en oeuvre pour la génération d'une séquence de référence.

Les séquences aléatoires de référence $w_I$, $w_L$ et $w_B$ sont calculées dans le domaine fréquentiel, filtrées dans ce domaine avant d'être repassées dans le domaine temporel.

La séquence de référence dans le domaine de Fourier est donnée par:

$$\begin{aligned} W(k) &= m(k)e^{-2\pi j aleat(k)} &\quad k &= L_{Min},...,L_{Max} \\ &= 0 &\quad k &= [0,...,L_{Min}-1] \cup [L_{Max}+1,...,L/2-1] \end{aligned} \quad (25)$$

où $j$ est la racine carrée de -1. Le signal W(k) a été filtré dans le domaine fréquentiel pour ne retenir que les fréquences supérieures à $F_{Min}$ et inférieures à $F_{Max}$ correspondant aux raies $L_{Min}$ et $L_{Max}$. Ceci permet de tenir compte du fait que les très basses fréquences ne sont pas utiles et que les fréquences supérieures à $F_{Max}$ peuvent être éliminées par certains codecs de compression de débit tels ceux du type AAC ou HE-AAC.

$F_{Max}$ et $L_{Max}$ sont liés par la formule suivante:

$$F_{Max} = L_{Max}\frac{F_i}{L} \quad (26)$$

Où $F_i$ est la fréquence d'échantillonnage interne du détecteur et $L$ la longueur de la séquence de référence (égale à $L_I$, $L_L$ ou $L_B$ selon qu'il s'agit de la séquence d'identificateur initial, local ou de symbole).

$aleat(k)$ est un nombre aléatoire uniformément réparti entre 0 et 1 fourni par un générateur de nombres aléatoires initialisé par une graine donnée par la clef $K_1$ qui doit être connue à l'insertion et à la détection.

Le module du signal $m(k)$ est donné par:

$$m(k) = 1 + \sigma\, gauss(k) \quad (27)$$

où *gauss(k)* est un nombre aléatoire gaussien de variance 1 et σ un facteur de gain de cadrage. *gauss(k)* est obtenu en sortie d'un générateur de nombres aléatoires gaussien initialisé au moyen d'une clef $K_2$ connue de l'insertion et de la détection.

La symétrie Hermitienne est rendue au signal de référence dans le domaine fréquentiel par symétrie et l'opération de complexe conjugué:

$$W(L-k) = W^*(k)\, k = 1, ..., L/2 - 1 \quad (28)$$

Moyennant la symétrie Hermitienne, la séquence de référence donnée dans le domaine temporel par FFT inverse sera réelle:

$$\overline{w} = IFFT(\overline{W})$$

Dans le cas des séquences de référence de symboles, $2^{N_b}$ séquences aléatoires sont générées. A ce stade, on peut éventuellement utiliser une procédure d'orthogonalisation dite de Gram-Schmidt.

Selon un mode de réalisation de l'invention représenté à la figure 13, un dispositif ou système mettant en oeuvre l'invention est par exemple un micro-ordinateur 210 qui comporte de façon connue, notamment une unité de traitement 220 équipée d'un microprocesseur, une mémoire morte de type ROM 230, une mémoire vive de type RAM 240. Le micro-ordinateur 210 peut comporter de manière classique et non exhaustive les éléments suivants: un clavier, un écran, un microphone, un haut-parleur, une interface de communication, un lecteur de disque, un moyen de stockage...

La mémoire morte 230 comporte des registres mémorisant un programme d'ordinateur PG comportant des instructions de programme adaptées à mettre en oeuvre un procédé de détection de message selon l'invention tel que décrit en référence à la figure 6. Ce programme PG comporte plusieurs modules logiciels ou analyseurs. Ce programme est ainsi adapté à calculer par une pluralité d'analyseurs, des corrélations entre le signal audio tatoué et les séquences de références utilisées pour l'insertion de l'identificateur initial, des identificateurs locaux et des symboles, à associer à chacun des analyseurs un score de corrélation d'identificateur initial, un score de corrélation d'identificateur local et un score de corrélation de symboles dépendants du calcul des corrélations, à déterminer un score global de corrélation par analyseur, dépendant de son score de corrélation d'identificateur initial, de son score de corrélation d'identificateur local et de son score de corrélation de symboles et à déterminer le message à détecter en fonction des scores globaux des analyseurs. Ce message ainsi détecté pourra être affiché en sortie 270.

Le signal numérique tatoué est par exemple reçu en flux continu en provenance d'un réseau extérieur 250 ou est stocké dans un espace mémoire 230 ou encore est lisible sur un support de stockage amovible de type CD, DVD ou autre lorsque ce support est inséré dans le lecteur correspondant.

Les séquences de référence sont retrouvées grâce à la connaissance des clés qui ont permis de les générer à l'insertion. Ces clés sont soit reçues d'un réseau extérieur en 260, soit stockées dans un espace mémoire 230 du dispositif ou sur un support mémoire amovible.

Lors de la mise sous tension, le programme PG stocké dans la mémoire morte 230 est transféré dans la mémoire vive qui contiendra alors le code exécutable de l'invention ainsi que des registres pour mémoriser les variables nécessaires à la mise en oeuvre de l'invention.

De manière plus générale un moyen de stockage, lisible par un ordinateur ou par un microprocesseur, intégré ou non au dispositif, éventuellement amovible, mémorise un programme mettant en oeuvre le procédé de détection de message selon l'invention.

**Revendications**

**1.** Procédé de détection d'un message dans un signal numérique tatoué, une trame du signal tatoué comportant un identificateur initial ayant été inséré à partir d'une séquence de référence prédéfinie, le procédé étant **caractérisé en ce qu'**il comporte les étapes suivantes:

- analyse (E61) par une pluralité d'analyseurs d'un système de détection, par calcul des corrélations entre le signal tatoué et la séquence de référence prédéfinie;
- association (E62) à chacun des analyseurs d'un score de corrélation d'identificateur initial dépendant du calcul des corrélations;
- détermination (E64) de l'identificateur initial en fonction du score d'identificateur initial des analyseurs.

2.  Procédé selon la revendication 1 dans lequel une trame du signal tatoué comporte au moins un identificateur initial et plusieurs séries de symboles constituant le message inséré, les symboles ayant été insérés à partir de séquences de référence prédéfinies, **caractérisé en ce que**:

- lors de l'étape d'analyse (E61) par une pluralité d'analyseurs un calcul des corrélations entre le signal tatoué et les séquences de référence utilisées pour l'insertion des symboles est effectué,
- lors de l'étape d'association (E62) un score de corrélation de symboles dépendant du calcul des corrélations est associé à chaque analyseur;

et **en ce qu'**il comporte en outre les étapes de:

- détermination (E63) d'un score global de corrélation par analyseur, dépendant de son score de corrélation d'identificateur initial, de son score de corrélation de symboles;
- détermination (E64) du message à détecter en fonction des scores globaux des analyseurs.

3.  Procédé selon la revendication 2 dans lequel une trame du signal tatoué comporte en outre des identificateurs locaux entourant les séries de symboles du message inséré, les identificateurs ayant été insérés à partir de séquences de référence prédéfinies, **caractérisé en ce que**:

- lors de l'étape d'analyse (E61) par une pluralité d'analyseurs un calcul des corrélations entre le signal tatoué et les séquences de référence utilisées pour l'insertion des identificateurs locaux est effectué,
- lors de l'étape d'association (E62) un score de corrélation d'identificateur local dépendant du calcul des corrélations est associé à chaque analyseur;
- la détermination (E63) d'un score global de corrélation par analyseur, dépend de son score de corrélation d'identificateur initial, de son score de corrélation de symboles et de son score de corrélation d'identificateur local;

4.  Procédé selon l'une des revendications 1 à 3, **caractérisé en ce que** le signal tatoué est prétraité lors d'une étape de filtrage (40) comportant un filtrage inverse et un filtrage de Wiener utilisant un filtre calculé à partir d'une fonction de corrélation d'au moins une séquence d'apprentissage de l'identificateur initial.

5.  Procédé selon l'une des revendications 1 ou 4, **caractérisé en ce qu'**il comporte une procédure d'activation des analyseurs qui comporte les étapes suivantes:

- calcul de corrélation (E702) en continu entre le signal tatoué et la séquence de référence utilisée pour l'insertion de l'identificateur initial;
- comparaison (E703) des valeurs de corrélation ainsi calculées à un seuil prédéterminé;

à la détection d'une valeur de corrélation supérieure au seuil prédéterminé:

- déclenchement (E706, E709) d'un analyseur et association d'un score de corrélation d'identificateur initial à cet analyseur.

6.  Procédé selon la revendication 5, **caractérisé en ce que** le déclenchement de l'analyseur s'effectue à la détection d'un maxima local (E85) des valeurs de corrélations supérieures au seuil.

7.  Procédé selon l'une des revendications 5 ou 6, **caractérisé en ce que** le déclenchement d'un analyseur s'effectue après vérification (E704) de la disponibilité de cet analyseur dans le système de détection.

8.  Procédé selon la revendication 7, **caractérisé en ce qu'**il comporte les étapes suivantes, en cas d'indisponibilité d'analyseur:

- comparaison des scores de corrélation d'identificateur initial des analyseurs du système de détection;

EP 1 936 950 A1

dans le cas où l'analyseur qui a le plus mauvais score de corrélation d'identificateur initial a également un score de corrélation d'identificateur initial inférieur à la valeur de corrélation à l'origine de l'étape de déclenchement:

- arrêt de l'analyseur qui est associé au plus mauvais score et redémarrage pour une nouvelle analyse dudit analyseur avec un nouveau score d'identificateur initial.

9. Procédé selon l'une des revendications 5 à 8, **caractérisé en ce que** le calcul de corrélation en continu entre le signal tatoué et la séquence de référence utilisée pour l'insertion de l'identificateur initial s'effectue par un calcul de corrélation sur un bloc courant de $L_I$ échantillons du signal tatoué, $L_I$ étant le nombre d'échantillons de l'identificateur initial, et de façon itérative sur les $L_I$ échantillons décalés de N échantillons, $L_I$ étant multiple de N.

10. Procédé selon la revendication 9, **caractérisé en ce que** le calcul de corrélation entre le signal tatoué et la séquence de référence utilisée pour l'insertion de l'identificateur initial s'effectue par une méthode de type transformée de Fourier qui comporte les étapes suivantes:

- segmentation en sous-séquences d'un bloc courant de $L_I$ échantillons du signal tatoué;
- segmentation en sous-séquences de la séquence de référence, la deuxième moitié de la sous-séquence de référence étant mise à 0;
- application d'une transformée de Fourier aux sous-séquences du bloc courant et aux sous-séquences de la séquence de référence;
- calcul de corrélations partielles par le produit sur les échantillons résultant de la transformée des sous-séquences du bloc courant et ceux du complexe conjugué des sous-séquences de la séquence de référence;
- sommation des corrélations partielles calculées;
- application d'une transformée de Fourier inverse à la somme issue de l'étape de sommation pour obtenir les valeurs de corrélation.

11. Procédé selon l'une des revendications 5 à 10, **caractérisé en ce que** le score d'identificateur initial est fonction de la valeur de corrélation à l'origine de l'étape de déclenchement et du nombre d'échantillons de l'identificateur initial.

12. Procédé selon l'une des revendications 2 à 11, **caractérisé en ce que** le calcul de corrélation entre le signal tatoué et les séquences utilisées pour l'insertion des symboles s'effectue sur une plage de débuts possibles, le calcul donnant à la fois la valeur du symbole et le décalage par rapport à une position de début idéal.

13. Procédé selon la revendication 12, **caractérisé en ce que** le score de corrélation de symboles est déterminé à partir des scores respectifs d'un ensemble prédéterminé de symboles, un score d'un symbole étant fonction de la valeur du maximum de corrélation du symbole, du décalage et du nombre d'échantillons du symbole.

14. Procédé selon l'une des revendications 3 à 13, **caractérisé en ce que** le calcul de corrélation entre le signal tatoué et la séquence utilisée pour l'insertion de l'identificateur local s'effectue sur une plage de débuts possibles autour du dernier échantillon du dernier symbole détecté, le calcul donnant à la fois la valeur de corrélation et le décalage par rapport à une position de début idéal.

15. Procédé selon la revendication 14, **caractérisé en ce que** le score de corrélation d'identificateur local est fonction de la valeur de corrélation, du décalage et du nombre d'échantillons de l'identificateur local.

16. Procédé selon l'une des revendications précédentes, **caractérisé en ce qu'**il comporte en outre une étape de ré-échantillonnage du signal tatoué en fonction de la fréquence d'échantillonnage du système de détection.

17. Procédé selon l'une des revendications 2 à 16, **caractérisé en ce que** l'étape de détermination du message à détecter s'effectue en examinant le score global des analyseurs qui ont terminé leur analyse, les recouvrements des plages d'analyse desdits analyseurs afin de résoudre d'éventuels conflits temporels.

18. Système de détection d'un message dans un signal numérique tatoué, une trame du signal tatoué comportant un identificateur initial ayant été inséré à partir d'une séquence de référence prédéfinie, le système étant **caractérisé en ce qu'**il comporte:

- une pluralité d'analyseurs effectuant des analyses par calcul des corrélations entre le signal tatoué et la séquence de référence prédéfinie;

- des moyens d'association à chacun des analyseurs d'un score de corrélation d'identificateur initial;
- des moyens de détermination de l'identificateur initial en fonction du score d'identificateur initial des analyseurs.

**19.** Programme d'ordinateur comprenant des instructions de code pour la mise en oeuvre des étapes d'un procédé de détection d'un message conforme à l'une des revendications 1 à 17, lorsque ledit programme est exécuté par un processeur.

**20.** Terminal multimédia apte à recevoir un signal numérique tatoué, **caractérisé en ce qu'**il comporte des moyens nécessaires à la mise en oeuvre d'un procédé conforme à l'une des revendications 1 à 17.

16

$s_a(n)$

$s(n)$

13

Modèle
psycho-
acoustique

Gain

15

Symbole $i_b$

$w_i(n)$

11

Génération
$w_i(n)$
dictionnaire

Modulation

$w_{i_b}(n)$

Génération
$w_{f i_b}(n)$

$w_{f i_b}(n)$

K

12

14

**Fig.1 (Etat de l'art)**

21

22

$s(n)$

Filtrage

$x(n)$

Détection par
Corrélation

$k_s$

$\hat{i}_b$

23

K

Génération
$w_i(n)$
dictionnaire

$w_i(n)$

**Fig.2 (Etat de l'art)**

**Fig.3**

**Fig.4**

**Fig.5**

$x^t(n)$

| $\bar{R}^t_{\hat{x}w_I}, \bar{R}^t_{\hat{x}w_L}, \bar{R}^t_{\hat{x}w_B}$ | E61 |

| ScI, ScL, ScB | E62 |

| ScG | E63 |

| M | E64 |

**Fig.6**

EP 1 936 950 A1

Fig.7

23

**Fig.8**

$$x^t(n), n = 0, ..., N - 1$$
$$= \overline{\hat{x}}^t_{R-1}$$

90    91    ⇓

| 1 | 2 | 3 | 4 | 5 | 6 |

Corr.

92    $\hat{x}^t(n), n = 0, ..., L_1 - 1$

⇓

S

93

**Fig.9a**

$$x^{t+1}(n), n = 0, ..., N - 1$$

90    91    ⇓

| 1 | 2 | 3 | 4 | 5 | 6 |

Corr.

92

⇓

S

93

$k_s$

**Fig.9b**

$$\overline{W}_{I_i} = FFT(\overline{w}_{I_i})$$
$$\overline{\hat{x}}_{R-1}^{\,t}$$
$$\overline{Y} = 0$$

E100

$i=0$   E101

E104   $i=i+1$

$$\overline{\hat{X}}_i^t = \overline{\hat{X}}_{i+1}^t$$   E102

Non   $i=R-2$   E103

Oui

$$\overline{\hat{X}}_{R-1}^t = FFT(\overline{\hat{x}}_{R-1}^t)$$   E105

$i=0$   E106

E109   $i=i+1$

$$\overline{Y} = \overline{Y} + \overline{\hat{X}}_i^t \overline{W}_{I_i}^*$$   E107

Non   $i=R-1$   E108

Oui

$$\overline{R}_{\hat{x}w_I}^t = IFFT(\overline{Y})$$   E110

Fin

**Fig.10**

$$\overline{W}_{I_i} = FFT(\overline{w}_{I_i})\, i = 0,...,R-1$$

$$\overline{\hat{x}}_{R-1}{}^t$$

$$\overline{Y}_i = 0 \qquad i=0, ..., R\text{-}1$$

E111

$$\overline{\hat{X}}_{R-1}^t = FFT(\overline{\hat{x}}_{R-1}^t)$$

E112

i=0    E113

E116

i=i+1

$$\overline{Y}_i = \overline{Y}_{i+1} + W_{I_{R-1-i}}^* \; \overline{\hat{X}}_{R-1}^t$$

E114

Non

i=R-2    E115

Oui

$$\overline{Y}_{R-1} = W_{I_0}^* \; \overline{\hat{X}}_{R-1}^t$$

E117

$$\overline{R}_{\hat{x}w_I}^t = IFFT(\overline{Y}_0)$$

E118

Fin

**Fig.11**

$$R_{\hat{x}w_B}(i,j)$$

$$i = 0,...,2^{N_b}-1; \; j = -N_{DB},...,N_{DB}$$

E120

$$(i_{opt},d_{Bopt}) = \arg\max_{(i,j)}(H_B.R_{\hat{x}w_B}(i,j))$$

$$\text{pour } i = 0,...,2^{N_b}-1, \; j = -N_{DB},...,N_{DB}$$

E121

$$ScB_{NC} = H_B(d_{Bopt})R_{\hat{x}w_B}(i_{opt},d_{Bopt})/L_B$$

E122

**Fig.12**

**Fig.13**

Office européen
des brevets

# RAPPORT DE RECHERCHE EUROPEENNE

Numéro de la demande

EP 07 30 1627

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 02/091376 A (KONINKL PHILIPS ELECTRONICS NV [NL]) 14 novembre 2002 (2002-11-14) * abrégé; revendications 9,11 * ----- | 1-20 | INV. H04N1/32 G10L19/00 |
| D,A | DATABASE COMPENDEX [Online] ENGINEERING INFORMATION, INC., NEW YORK, NY, US; septembre 2006 (2006-09), BARAS CLEO ET AL: "Controlling the inaudibility and maximizing the robustness in an audio annotation watermarking system" XP002454546 Database accession no. E20071510547594 * abrégé * -& BARAS C ET AL: "Controlling the inaudibility and maximizing the robustness in an audio annotation watermarking system" IEEE TRANS. AUDIO SPEECH LANG. PROCESS.; IEEE TRANSACTIONS ON AUDIO, SPEECH AND LANGUAGE PROCESSING SEPTEMBER 2006, vol. 14, no. 5, septembre 2006 (2006-09), pages 1772-1782, XP002480076 ISSN: 1558-7916 ----- | 1-20 | |
| A | EP 1 594 122 A (THOMSON BRANDT GMBH [DE]) 9 novembre 2005 (2005-11-09) * abrégé; revendications 4-7 * ----- | 1-20 | DOMAINES TECHNIQUES RECHERCHES (IPC) H04N G10L G06T G11B |
| A | WO 02/49363 A (KENT RIDGE DIGITAL LABS [SG]; XU CHANGSHENG [SG]) 20 juin 2002 (2002-06-20) * abrégé; figures 6-8 * * page 15 - page 16 * ----- -/-- | 1-20 | |

Le présent rapport a été établi pour toutes les revendications

| Lieu de la recherche | Date d'achèvement de la recherche | Examinateur |
|---|---|---|
| La Haye | 14 mai 2008 | Brans, Tim |

EPO FORM 1503 03.82 (P04C02)

**Office européen**

**des brevets**

**RAPPORT DE RECHERCHE EUROPEENNE**

Numéro de la demande

EP 07 30 1627

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2005/029466 A (KONINKL PHILIPS ELECTRONICS NV [NL]; VAN DER VEEN MINNE [NL]; LEMMA AW) 31 mars 2005 (2005-03-31) * abrégé * ----- | 1-20 | |
| A | US 2005/144006 A1 (OH HYEN-O [KR]) 30 juin 2005 (2005-06-30) * alinéa [0089] - alinéa [0109]; figures 3,6 * ----- | 1-20 | |
| A | MALIK H ET AL: "Robust audio watermarking using frequency selective spread spectrum theory" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 5, 17 mai 2004 (2004-05-17), pages 385-388, XP010718946 ISBN: 0-7803-8484-9 * abrégé; figures 1,2,4 * ----- | 1-20 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 14 mai 2008 | Brans, Tim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

# EP 1 936 950 A1

## ANNEXE AU RAPPORT DE RECHERCHE EUROPEENNE
## RELATIF A LA DEMANDE DE BREVET EUROPEEN NO.

EP 07 30 1627

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-05-2008

| Document brevet cité au rapport de recherche | | Date de publication | Membre(s) de la famille de brevet(s) | | Date de publication |
|---|---|---|---|---|---|
| WO 02091376 | A | 14-11-2002 | AT | 345564 T | 15-12-2006 |
| | | | BR | 0205150 A | 24-06-2003 |
| | | | CN | 1462439 A | 17-12-2003 |
| | | | DE | 60216085 T2 | 21-06-2007 |
| | | | JP | 2004525430 T | 19-08-2004 |
| | | | US | 2003004589 A1 | 02-01-2003 |
| EP 1594122 | A | 09-11-2005 | AUCUN | | |
| WO 0249363 | A | 20-06-2002 | US | 2004059918 A1 | 25-03-2004 |
| WO 2005029466 | A | 31-03-2005 | CN | 1856822 A | 01-11-2006 |
| | | | JP | 2007506128 T | 15-03-2007 |
| | | | KR | 20060130020 A | 18-12-2006 |
| | | | US | 2007036357 A1 | 15-02-2007 |
| US 2005144006 | A1 | 30-06-2005 | CA | 2491688 A1 | 27-06-2005 |
| | | | CN | 1638479 A | 13-07-2005 |
| | | | KR | 20050066722 A | 30-06-2005 |

EPO FORM P0460

Pour tout renseignement concernant cette annexe : voir Journal Officiel de l'Office européen des brevets, No.12/82

32

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. BARAS ; N. MOREAU ; P. DYMARSKI.** Controlling the Inaudibility and Maximising the Robustness in an Audio Annotation Watermarking system. *IEEE Transactions on audio, speech, and language processing,* Septembre 2006, vol. 14 (5), 1772-1782